# EUROPÄISCHE PATENTSCHRIFT

(11) **EP 1 382 618 B1**
(45) Veröffentlichungstag und Bekanntmachung des Hinweises auf die Patenterteilung: **04.05.2005**
(21) Anmeldenummer: 03015547.7
(22) Anmeldetag: 10.07.2003
(51) Int. Cl.: C08F 4/34

(54) **Silicon-haltige Polymerisate von ethylenisch ungesättigten Monomeren**
Silicon containing polymers of ethylenically unsaturated monomers
Polymères de monomères insaturés éthyléniquement contenant silicium

(30) Priorität: 19.07.2002 DE 10232993
(43) Veröffentlichungstag der Anmeldung: 21.01.2004
(73) Patentinhaber: Wacker Polymer Systems GmbH & Co. KG, 84489 Burghausen (DE)
(72) Erfinder: Weitzel, Hans-Peter, Dr., 84571 Reischach (DE); Keller, Wolfgang, 84561 Mehring (DE)
(74) Vertreter: Schuderer, Michael, Dr.

(56) Entgegenhaltungen:
- DE-A- 4 426 832

## Beschreibung

Die Erfindung betrifft Silicon-haltige Polymerisate von ethylenisch ungesättigten Monomeren, Verfahren zu deren Herstellung sowie deren Verwendung

Festharze von Organopolymeren neigen häufig zum Verblocken. Es ist bekannt, dass Silikone gute Release-Eigenschaften haben, das heißt eine klebrige Stoffe abweisende Oberfläche haben. Abmischungen bzw. Blends von Vinylester-Festharzen mit Silikonen haben allerdings unbefriedigende Eigenschaften: Aufgrund der Unverträglichkeit von Vinylesterpolymer und Silikon kommt es zur Phasenseparation bzw. zur Ausbildung von Silikondomänen und damit zur Trübung der Festharze. Die Ausbildung von Silikondomänen und das Vorliegen nicht angebundenen Silikons führt darüber hinaus zu Migrationseffekten.

Aus der WO-A 01/85685 ist die Pfropfpolymerisation mit Siloxan-Makromonomeren bekannt, das heißt die Umsetzung von Polysiloxanen mit einer oder mehreren ungesättigten Gruppen bzw. Mercaptofunktionellen Polysiloxanen, welche über Regelung mit der SH-Gruppe wirken, mit ethylenisch ungesättigten Monomeren. Nachteilig ist die Inkompatibilität zwischen Silicon-Phase und Polymer-Phase. Aus der EP-A 493168 ist bekannt, zur Hydrophobierung von Polymerisaten deren wässrigen Dispersionen mit Siliconen abzumischen und anschließend zu trocknen. In der WO-A 95/20627 wird beschrieben, wässrige Polymerdispersionen unter anderem mit Oligosiloxanen, Silanen oder Polysilanen abzumischen und anschließend zu trocknen, um hydrophobierte Polymerisate zu erhalten. Die US-A 3203919 beschreibt die Herstellung von Beschichtungsmitteln mittels Mischen einer Polymerdispersion und einer Polysiloxan-Dispersion. Nachteilig bei diesen Vorgehensweisen ist das Problem der Inkompatibilität der Organopolymerphase und der Siliconphase, welche häufig zu inhomogenen Produkten führt.

Um diese Problematik zu umgehen, wird in der WO-A 95/20626 vorgeschlagen, die Siliconkomponente nicht nachträglich dem Organopolymer zuzumischen, sondern das Silicon bereits während der Polymerisation zuzugeben. Nachteilig ist dabei, dass häufig die Copolymerisation der ethylenisch ungesättigten Monomere behindert wird, und damit die Polymerisation verlangsamt wird bzw. die Produktqualität unbefriedigend ist.

Der Erfindung lag daher die Aufgabe zugrunde, mit Silicon modifizierte Polymerisate von ethylenisch ungesättigten Monomeren zur Verfügung zu stellen, welche nicht die obengenannten Nachteile aufweisen.

Gegenstand der Erfindung sind Silicon-haltige Polymerisate von ethylenisch ungesättigten Monomeren erhältlich durch radikalisch initiierte Polymerisation von ethylenisch ungesättigten Monomeren, dadurch gekennzeichnet, dass zur Initiierung der Polymerisation ein Organopolysiloxan eingesetzt wird, welches mindestens eine Peroxidgruppe -OOR¹ enthält, wobei R¹ ein Wasserstoffatom, einen einwertigen C₁- bis C₁₈-Kohlenwasserstoffrest oder C₁- bis C₁₈-Acylrest, welche jeweils mit Cyano-, Fluor-, Chlor-, Brom- oder Organopolysiloxan substituiert sein können, welche jeweils durch zweibindige, beidseitig an Kohlenstoffatome gebundene Reste aus der Gruppe -O-, -COO-, -OOC-, -CONR³-, -NR³CO-und -CO- unterbrochen sein können, bedeutet, und wobei R³ Wasserstoff oder einen gegebenenfalls Cyano-, Fluor-, Chlor- oder Brom-substituierten C₁- bis C₁₀-Kohlenwasserstoffrest bedeutet.

Vorzugsweise bedeutet R¹ ein Wasserstoffatom, einen einwertigen C₁- bis C₄-Kohlenwasserstoffrest, besonders bevorzugt gilt R¹ = H.

Geeignete Peroxid-funktionelle Organopolysiloxane (P), sind solche mit mindestens einer Einheit der allgemeinen Formel (I) YₐR_{b}SiO_{4-a-b/2} (I),
in der Y eine Gruppe der allgemeinen Formel -A-CR²₂-OO-R¹ (II) bedeutet,
und R ein Wasserstoffatom, einen C₁- bis C₁₂-Alkoxy-, Hydroxyoder Alkylglykolrest oder einwertigen, gegebenenfalls Cyano-, Fluor-, Chlor- oder Brom-substituierten C₁- bis C₁₈-Kohlenwasserstoffrest, welcher durch zweibindige, beidseitig an Kohlenstoffatome gebundene Reste aus der Gruppe -O-, -COO-, -OOC-, -CONR³-, -NR³CO-und -CO- unterbrochen sein kann, bedeutet,
und A eine chemische Bindung oder einen zweiwertigen gegebenenfalls Cyano-, Fluor-, Chlor- oder Brom-substituierten C₁ bis C₁₈-Kohlenwasserstoffrest, vorzugsweise Alkylenrest, bedeutet,
und R¹ ein Wasserstoffatom, einen einwertigen C₁- bis C₁₈-Kohlenwasserstoffrest oder C₁- bis C₁₈-Acylrest, welche jeweils mit Cyano-, Fluor-, Chlor- Brom- oder Organopolysiloxan substituiert sein können, welche jeweils durch zweibindige, beidseitig an Kohlenstoffatome gebundene Reste aus der Gruppe -O-, -COO-, -OOC-, -CONR³-, -NR³CO-und -CO- unterbrochen sein können, und
R² einen gegebenenfalls Cyano-, Fluor-, Chlor- oder Brom-substituierten C₁- bis C₁₀-Kohlenwasserstoffrest bedeutet, und
R³ die Bedeutung Wasserstoff oder R² hat,
und wobei gilt a = 1, 2 oder 3, und b = 0, 1 oder 2,
und a + b = 1, 2 oder 3.

Beispiele für unsubstituierte Reste R und R¹ sind Alkylreste, wie der Methyl-, Ethylrest; Cycloalkylreste, wie Cyclohexylrest; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest. Beispiele für substituierte Kohlenwasserstoffreste als Rest R und R¹ sind halogenierte Kohlenwasserstoffreste; Epoxialkylreste; (Meth)acryloxyalkylreste, Cyanoalkylreste; Aminoalkylreste; Aminoarylreste; quarternäre Ammoniumreste; und Hydroxyalkylreste.

Die Alkoxyreste R sind über ein Sauerstoffatom gebundene vorstehend beschriebene Alkylreste. Die Beispiele für Alkylreste R gelten im vollen Umfang auch für die Alkoxyreste. Bei dem Rest R handelt es sich bevorzugt üm unsubstituierte und substituierte C₁- bis C₁₈-Alkylreste, Wasserstoff und den Phenylrest, insbesondere um den Methyl-, Ethyl-, Propyl-, Octyl-, Hexyl-, Dodecyl-, Octadecyl-, Phenyl-, Vinyl-, Allyl-, Methacryloxypropyl-, 3-Chlorpropyl-, 3-Mercaptopropyl-, 3-Hydroxypropyl-, 3-(2,3-Dihydroxypropoxy)propyl-, 3-Aminopropyl- und den (2-Aminoethyl)-3-aminopropyl-Rest, Wasserstoff und quarternäre Ammoniumreste.

Bei dem Rest R¹ handelt es sich bevorzugt um Wasserstoff, unsubstituierte und substituierte C₁- bis C₁₈-Alkylreste, insbesondere um den tert.-Butyl, iso-Propyl-, Octyl-, Hexyl-, Dodecyl-, Octadecylrest. Bei dem Rest R² handelt es sich bevorzugt um unsubstituierte und substituierte C₁- bis C₆-Alkylreste, insbesondere um den Methyl-, Ethyl- und Propylrest.

Beispiele für zweiwertige Kohlenwasserstoffreste A sind gesättigte Alkylenreste wie der Methylen- und Ethylenrest, sowie Propylen-, Butylen-, Pentylen-, Hexylen-, Cyclohexylen- und Octadecylenreste oder ungesättigte Alkylen- oder Arylenreste, wie der Hexenylenrest und Phenylenreste, insbesondere lineare C1- bis C6-Alkylenreste, besonders bevorzugt der Ethylenrest.

Zusätzlich zu den Einheiten der allgemeinen Formel (I) kann das Organopolysiloxan (P) weitere Siloxaneinheiten aufweisen, vorzugsweise solche der allgemeinen Formeln [R₃SiO_{1/2}] (III), [R₂SiO_{2/2}](IV), [RSiO_{3/2}] (V), [SiO_{4/2}] (VI) , in denen R die vorstehenden Bedeutungen aufweist.

Vorzugsweise enthält das Organopolysiloxan (P)
1 bis 100.0 Mol-% Einheiten der allgemeinen Formel (I),
0 bis 50.0 Mol-% Einheiten der allgemeinen Formel (III),
0 bis 90.0 Mol-% Einheiten der allgemeinen Formel (IV),
0 bis 50.0 Mol-% Einheiten der allgemeinen Formel (V),
0 bis 50.0 Mol-% Einheiten der allgemeinen Formel (VI).

Insbesondere enthält das Organopolysiloxan (P)
1 bis 50.0 Mol-% Einheiten der allgemeinen Formel (I),
0 bis 40.0 Mol-% Einheiten der allgemeinen Formel (III),
10 bis 80.0 Mol-% Einheiten der allgemeinen Formel (IV),
0 bis 10.0 Mol-% Einheiten der allgemeinen Formel (V),
0 bis 10.0 Mol-% Einheiten der allgemeinen Formel (VI).

Das Organopolysiloxan (P) kann als lineares oder cyclisches Molekül vorliegen, die Peroxigruppen können kammartig oder am Kettenende angebunden sein. Das Organopolysiloxan (P) kann auch verzweigt oder vernetzt vorliegen.

Das Organopolysiloxan (P) weist insgesamt mindestens 2, vorzugsweise mindestens 3 Einheiten, besonders bevorzugt 20 bis 40 Einheiten, der allgemeinen Formeln (I) und (III) bis (VI) auf. Das molare Verhältnis der die Peroxid-Gruppe -OOR¹ tragenden Siloxan-Einheiten zu den restlichen Siloxan-Einheiten beträgt vorzugsweise 1 : 10 bis 1 : 1. Bevorzugt werden auch Organopolysiloxane mit terminalen Peroxid-Gruppen -OOR¹. Besonders bevorzugt werden Organopolydialkylsiloxane, insbesondere Polydimethylsiloxane, mit über Alkylen-Einheiten angebundene Peroxid-Einheiten, in der Kette oder terminal am Kettenende. Das Organopolysiloxan kann bei 25°C flüssig oder fest vorliegen. Vorzugsweise beträgt die Viskosität bei 25°C höchstens 100 Pas, bevorzugt höchstens 10 Pas, insbesondere höchstens 2 Pas.

Das Peroxid funktionelle Organopolysiloxan (P), welches mindestens eine Einheit der vorstehenden allgemeinen Formel (I) aufweist, kann hergestellt werden durch Umsetzung von Organopolysiloxan (A), welches mindestens eine Einheit der allgemeinen Formel ZₐR_{b}SiO_{4-a-b/2} (VII), aufweist, in der Z eine Gruppe der allgemeinen Formel -A-CR²₂-OH (VIII), oder in der Z eine Gruppe der allgemeinen Formel -A-CR²=CH₂ (IX), bedeutet, mit H₂O₂, wobei R, R², a und b die vorstehendn Bedeutungen aufweisen.
Dabei wird Organopolysiloxan (P) erhalten, bei dem R¹ ein Wasserstoffatom bedeutet.

Das den Rest der allgemeinen Formel (VIII) enthaltende Organopolysiloxan der allgemeinen Formel (VII) kann beispielsweise hergestellt werden durch übergangsmetallkatalysierte Umsetzung von ungesättigten tertiären Alkoholen mit SiH-Bindungen enthaltenden Polysiloxanen (Hydrosilylierung), wie zum Beispiel 2-Methyl-3-buten-2-ol, 2-Hydroxy-2,5-dimethyl-5-hexen, oder H₂C=CMe-Ph-CMe₂OH.
Das den Rest der allgemeinen Formel (IX) enthaltende Organopolysiloxan der allgemeinen Formel (VII) kann beispielsweise hergestellt werden durch übergangsmetallkatalysierte Umsetzung eines solchen Überschusses doppelt ungesättigter, 2-Propenylgruppen enthaltender Verbindungen mit SiH-Bindungen enthaltenden Polysiloxanen (Hydrosilylierung), wie zum Beispiel 2,5-Dimethyl-1,5-hexadien, oder H₂C=CMe-Ph-CMe=CH₂, so dass im Mittel nur eine der Doppelbindungen in der Reaktion verbraucht wird.
Das den Rest der allgemeinen Formel (IX) enthaltende Organopolysiloxan der allgemeinen Formel (VII) kann ebenfalls hergestellt werden durch Si-C-Kopplungsreaktionen unter Verwendung metallorganischer Reagenzien, beispielsweise durch Reaktion von SiCl-Gruppen enthaltendem Polysiloxan mit Grignard-Reagenzien der Formel H₂C=CMe-MgCl oder H₂C=CMe-CH₂MgCl, oder anderen metallorganischen Kopplungsreagienzien.

Zur Herstellung der Organopolysilöxane (P), bei denen R¹ einen einwertigen C₁- bis C₁₈-Kohlenwasserstoffrest oder C₁- bis C₁₈-Acylrest bedeutet, welche jeweils mit Cyano-, Fluor-, Chlor-Brom- oder Organopolysiloxan substituiert sein können, welche jeweils durch zweibindige, beidseitig an Kohlenstoffatome gebundene Reste aus der Gruppe -O-, -COO-, -OOC-, -CONR³-, -NR³CO-und -CO- unterbrochen sein können, wird Organopolysiloxan (P), bei dem R¹ ein Wasserstoffatom bedeutet, mit Verbindung der der allgemeinen Formel XR¹ (X), umgesetzt, wobei R¹ einen einwertigen C₁- bis C₁₈-Kohlenwasserstoffrest oder C₁bis C₁₈-Acylrest, welche jeweils mit Cyano-, Fluor-, Chlor-Brom- oder Organopolysiloxan substituiert sein können, welche jeweils durch zweibindige, beidseitig an Kohlenstoffatome gebundene Reste aus der Gruppe -O-, -COO-, -OOC-, -CONR³-, -NR³CO-und -CO- unterbrochen sein können, bedeutet, und X Fluor, Chlor, Brom, Hydroxyl, Wasserstoff oder Säureanhydridrest bedeuten.

Wenn X Wasserstoff bedeutet, kann die Umsetzung beispielsweise zusammen mit CuCl erfolgen. Wenn X Fluor, Chlor, Brom bedeutet, kann die Umsetzung beispielsweise zusammen mit Dicyclohexylcarbodiimid erfolgen. Wenn R¹ Acylrest bedeutet und X Säureanhydridrest bedeutet, kann die Umsetzung beispielsweise zusammen mit CuCl erfolgen.

Die Umsetzung von Organopolysiloxan (A) mit H₂O₂ findet vorzugsweise unter Säurekatalyse statt. Bevorzugt sind starke Säuren, wie Schwefelsäure. Die Umsetzung von Organopolysiloxan (A) mit H₂O₂ erfolgt vorzugsweise in einer Lösung oder Dispersion des Organopolysiloxans (A). Vorzugsweise werden Alkohole oder ähnlichen polare Lösemittel eingesetzt. Die Umsetzung von Organopolysiloxan (A) mit H₂O₂ erfolgt vorzugsweise bei 20 bis 100°C.

Organopolysiloxan (A) ist an sich bekannt. Es kann beispielsweise hergestellt werden durch Addition von aliphatisch ungesättigten tertiären Alkoholen an SiH-Gruppen aufweisende Organopolysiloxane.

Als ethylenisch ungesättigte Monomere geeignet sind ein oder mehrere Monomere aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren sowie deren Amide bzw. N-Methylolamide und Nitrile, ethylenisch ungesättigte Sulfonsäuren, ethylenisch ungesättigte heterocyclische Verbindungen, Diene, Olefine, Vinylaromaten und Vinylhalogenide.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Resolution). Besonders bevorzugt ist Vinylacetat.

Geeignete Monomere aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Beispiele für geeignete ethylenisch ungesättigte Mono- und Di-Carbonsäuren sowie deren Amide bzw. N-Methylolamide und Nitrile sind Acrylsäure, Methacrylsäure, Fumarsäure, Maleinsäure, Acrylamid, N-Methylolacrylamid, N-Methylolmethacrylamid und Acrylnitril. Beispiele für ethylenisch ungesättigte Sulfonsäuren sind Vinylsulfonsäure und 2-Acrylamido-2-methyl-propansulfonsäure. Geeignete ethylenisch ungesättigte heterocyclische Verbindungen sind Vinylpyrrolidon, Vinylpyridin.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 50 Gew.-%, bezogen auf das Gesamtgewicht des Monomergemisches, Hilfsmonomere copolymerisiert werden. Bevorzugt werden 0.5 bis 15 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch sättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere, wie mehrfach ethylenisch ungesättigte Comonomere, beispielsweise Divinyladipat, Diallylmaleat, Diallylphthalat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere wie Acryloxypropyltri-(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyloder Hydroxybutylacrylat oder -methacrylat sowie Verbindungenwie Diacetonacrylamid und Acetylacetoxyethylacrylat oder -methacrylat. Geeignet sind auch aminofunktionelle Comonomere wie 2-Dimethylaminoethylmethacrylat, 3-Dimethylaminopropylmethacrylamid, 2-Trimethylammoniummethylmethacrylatchlorid, 3-Trimethylammoniumpropylmethacrylamidchlorid.

Besonders bevorzugt werden Monomere oder Gemische, welche ein oder mehrere Monomere aus der Gruppe Vinylacetat, Vinylester von α-verzweigten Monocarbonsäuren mit 9 bis 13 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Am meisten bevorzugt werden Gemische von Vinylacetat mit Ethylen; von Vinylacetat, Ethylen und einem Vinylester von α-verzweigten Monocarbonsäuren mit 9 bis 13 C-Atomen; von n-Butylacrylat mit 2-Ethylhexylacrylat und/oder Methylmethacrylat; von Styrol mit einem oder mehreren Monomeren aus der Gruppe Methylacrylat, Ethylacrylat, Propylacrylat, n-Butylacrylat, 2-Ethylhexylacrylat; von Vinylacetat mit einem oder mehreren Monomeren aus der Gruppe Methylacrylat, Ethylacrylat, Propylacrylat, n-Butylacrylat, 2-Ethylhexylacrylat und gegebenenfalls Ethylen; wobei die genannten Gemische gegebenenfalls noch ein oder mehrere der obengenannten Hilfsmonomere enthalten können.

Die Monomerauswahl bzw. die Auswahl der Gewichtsanteile der Comonomere erfolgt dabei so, dass im allgemeinen eine Glasübergangstemperatur Tg von -50°C bis +120°C, vorzugsweise - 30°C bis +95°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt:
1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die radikalisch initiierte Polymerisation der ethylenisch ungesättigten Monomeren kann grundsätzlich mit allen hierfür bekannten Polymerisationsverfahren erfolgen wie Massepolymerisation, Lösungspolymerisation, Fällungspolymerisation, SuspenSionspolymerisation, Emulsionspolymerisation und Miniemulsionspolymerisation. Bevorzugt wird die Miniemulsionspolymerisation, die sich dadurch auszeichnet, dass die Komponenten Wasser , Emulgator und Monomer durch Einwirkung von Kraft, bevorzugt Scherkraft, in eine feinteilige Emulsion, bevorzugt 100 bis 500 nm, überführt werden. Diese Emulsion wird dann durch Polymerisation in eine Dispersion annähernd gleicher Teilchengröße überführt. Diese dem Fachmann bekannte Vorgehensweise wird vorteilhafterweise insbesondere dann eingesetzt, wenn Komponenten mit sehr niedriger oder keiner Wasserlöslichkeit verwendet werden (Literatur z.B.: El-Aasser et.al., Macromol.Symp. 92, 157-168 (1995)).

Die Polymerisationstemperatur beträgt im allgemeinen 40°C bis 100°C, vorzugsweise 60°C bis 90°C. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Zur Initiierung der Polymerisation werden die Peroxidfunktionellen Organopolysiloxane im allgemeinen in einer Menge von 5 bis 95 Gew.-%, bevorzugt 20 bis 80 Gew.-%, jeweils bezogen auf das Gesamtgewicht der Monomere, eingesetzt. Die Peroxid-funktionellen Organopolysiloxane werden bevorzugt als Redox-Initiatoren verwendet werden, in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, Ascorbinsäure, mehrwertige Amine wie (Trisaminoethyl)amin, Diethylentriamin, sowie Metallionen, die in mehreren Oxidationsstufen auftreten wie Fe(II) und Co(II). Die Reduktionsmittelmenge beträgt im allgemeinen 0.01 bis 10.0 Gew.-%, bevorzugt 0.1 bis 0.5 Gew.-%, jeweils bezogen auf das Gesamtgewicht der Monomere.

Bei den Verfahren der Suspensions- und Emulsionspolymerisation sowie bei der als bevorzugt genannten Miniemulsionspolymerisation wird in Gegenwart von oberflächenaktiven Substanzen wie Schutzkolloiden und/oder Emulgatoren polymerisiert. Geeignete Schutzkolloide sind beispielsweise teilverseifte Polyvinylalkohole, Polyvinylpyrrolidone, Polyvinylacetale, Stärken, Cellulosen und deren Carboxymethyl-, Methyl-, Hydroxyethyl-, Hydroxypropyl-Derivate. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 60 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten.

Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die Silicon-haltigen Polymerisate finden Anwendung in den folgenden Industriebereichen:
In der Kunststoffverarbeitung und-additivierung
als Kunststoff-Additive zur Verbesserung des Eigenschaftsprofils, wie der Schlagzähmodifizierung und zur Verbesserung der Tieftemperaturschlagzähigkeit,
als Additive für Gleit- (Slip-) und Trenneigenschaften in Polymeren,
als Kompatibilisatoren für Polymerblends,
als Additive in Siliconelastomerformulierungen z.B. zur Erhöhung der Dampfdichtigkeit oder Verbesserung/Modifizierung des Eigenschaftsprofils,
als Additive zur Erhöhung der Temperaturbeständigkeit von Kunststoffen und Elastomeren, beispielsweise in der Automobilindustrie im motorennahen Bereich, und
als PVC-Schaumstabilisatoren

In der Formkörperherstellung und Beschichtung als Dichtungen, Preßartikel, extrudierte Profile mit hoher Temperaturbeständigkeit, Kabelbeschichtungen, Isolationsbeschichtungen, Imprägnierbeschichtung.
In der Lackindustrie als Lackadditive zur Herabsetzung der Sprödigkeit, zur Erhöhung der Hydrophobizität von Lacken, zur Erweiterung des Temperaturbereiches, als Bindemittelzusatz und Haftvermittler.

Im Bautenschutz als Dispersion als hydrophobierendes Bindemittel für Farben und Beschichtungen, in organischer Lösung als Imprägniermittel für Oberflächen, als Massehydrophobiermittel bei der Ziegelherstellung, Gipskartonplatten, Zementfaserplatten.
In der Textilindustrie zur Textilausrüstung, Textilbeschichtung, Faserbehandlung, Textil- und Faserhydrophobierung, Faserbindemittel für Nonwovens, als Additive zum Verleihen des Weichgriff, Hydrophobizität, Antiknitterausrüstung.
In der Papierindustrie zur Trennpäpierbeschichtung (Releasebeschichtung) - als Lösung oder Dispersion, als Toneradditive, und als Hilfsmittel im Papierstrich.
Weitere Anwendungen sind die als Prozeßhilfsmittel,
als Antschaummittel und Entlüfter z.B. in der Papier- oder Textil-industrie, zur Abwasserbehandlung, und als Additiv in Agrochemikalien (Pflanzenschutz),
als hochschmelzende Mould-release-Hilfsmittel und Entschalungshilfsmittel mit besserem Temperaturprofil als Polyolefinwachse,
zur Oberflächenbehandlung als hydrophobierender und filmbildender Bestandteil in Polituren (Haushalt, Auto),
in der Kosmetik in Haarspray, Haargel, Haarfixativ, Färbemittel, Shampoo, Konsistenzgeber für Cremes.

Die Silicon-haltigen Polymerisate können auch in den typischen Anwendungsbereichen für Polymerdispersionen und Dispersionspulver eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, insbesondere Fliesenkleber und Vollwärmeschutzkleber, Putzen, Spachtelmassen, Fussbodenspachtelmassen, Verlaufsmassen, Dichtschlämmen, Fugenmörtel und Farben. Ferner als Bindemittel für Beschichtungsmittel und Klebemittel oder als Beschichtungs- und Bindemittel für Textilien, Fasern, Holz und Papier.

### Beispiele:

### Beispiel 1 (Emulsionspolymerisation):

Eine Mischung aus 1200 g Wasser, 65 g Acrylamid (30 %-ig), 97 g Melon (20 %-ig) , 39 g Methacrylsäure, 75 g Butylacrylat, 314 Methylmethacrylat und 43 g hydroperoxidhaltiges Polysiloxan wurden mit Hilfe eines Ultraturrax 15 min homogenisiert. Die erhaltene Emulsion hatte eine Teilchengröße von ca. 600 nm.
Diese Emulsion wurde in ein thermostatisierbares Polymerisationsgefäß von 2 Liter Größe gegeben und auf 70°C erwärmt. Bei Erreichen der Temperatur wurden 37 g Ascorbinsäurelösung (5 %ig) innerhalb von 2 h zugegeben. Die Polymerisationstemperatur wurde durch externe Kühlung bei 70°C bis 75°C gehalten. Nach Ende der Polymerisation wurde die erhaltene Dispersion abgekühlt, filtriert und abgefüllt. Der Feststoffgehalt betrug 31 % und die Teilchengröße ca. 600 nm.

Das eingesetzte hydroperoxidhaltige Polysiloxan hat folgende Kennzahlen: Polydimethylsiloxan mit Hydroperoxid-haltigen Methybutanol-Einheiten mit einem Polymerisationsgrad von 30 bis 40, sowie einem Verhältnis von Dimethylsiloxaneinheiten zu Hydroperoxid-haltigen Siloxaneinheiten von 3.5 : 1.

### Beispiel 2 (Lösungspolymerisation):

In einem thermostatisierbaren Polymerisationsgefäß von 1 Liter Größe wurden 350 g trockenes Toluol vorgelegt. Zu dieser Vorlage wurden 43 g Hydroperoxidhaltiges Polysiloxan (wie in Beispiel 1) und 86 g Methylmethacrylat zugegeben. Die Mischung wurde auf 70°C erhitzt. Anschließend wurden 2.1 g Aktivator (C-101, Degussa) gelöst in 6.5 g Toluol innerhalb von 30 min zudosiert. Die Polymerlösung wurde noch weitere 60 min auf 70°C erhitzt und dann abgekühlt. Das Toluol wurde destillativ abgetrennt und der Rückstand im Trockenschrank getrocknet. Man erhielt ein weißes wachsartiges Material bzw. Pulver.

## Patentansprüche

1. Silicon-haltige Polymerisate von ethylenisch ungesättigten Monomeren erhältlich durch radikalisch initiierte Polymerisation von ethylenisch ungesättigten Monomeren, **dadurch gekennzeichnet, dass** zur Initiierung der Polymerisation ein Organopolysiloxan eingesetzt wird, welches mindestens eine Peroxidgruppe -OOR¹ enthält, wobei R¹ ein Wasserstoffatom, einen einwertigen C₁- bis C₁₈-Kohlenwasserstoffrest oder C₁- bis C₁₈-Acylrest, welche jeweils mit Cyano-, Fluor-, Chlor-, Brom- oder Organopolysiloxan substituiert sein können, welche jeweils durch zweibindige, beidseitig an Kohlenstoffatome gebundene Reste aus der Gruppe -O-, -COO-, -OOC-, -CONR³-, -NR³CO-und -CO- unterbrochen sein können, bedeutet, und wobei R³ Wasserstoff oder einen gegebenenfalls Cyano-, Fluor-, Chlor- oder Brom-substituierten C₁- bis C₁₀-Kohlenwasserstoffrest bedeutet.

2. Silicon-haltige Polymerisate gemäß Anspruch 1, wobei das Peroxid-funktionelle Organopolysiloxan mindestens eine Einheit der allgemeinen Formel YₐR_{b}SiO_{4-a-b/2} (I) aufweist, in der Y eine Gruppe der allgemeinen Formel -A-CR²₂-OO-R¹ (II) bedeutet,
und R ein Wasserstoffatom, einen C₁- bis C₁₂-Alkoxy-, Hydroxy- oder Alkylglykolrest oder einwertigen, gegebenenfalls Cyano-, Fluor-, Chlor- oder Brom-substituierten, C₁ bis C₁₈-Kohlenwasserstoffrest, welcher durch zweibindige, beidseitig an Kohlenstoffatome gebundene Reste aus der Gruppe -O-, -COO-, -OOC-, -CONR³-, -NR³CO-und -CO- unterbrochen sein kann, bedeutet,
und A eine chemische Bindung oder einen zweiwertigen gegebenenfalls Cyano-, Fluor-, Chlor- oder Brom-substituierten C₁- bis C₁₈-Kohlenwasserstoffrest, bedeutet, und R¹ ein Wasserstoffatom, einen einwertigen C₁- bis C₁₈-Kohlenwasserstoffrest oder C₁- bis C₁₈-Acylrest, welche jeweils mit Cyano-, Fluor-, Chlor- Brom- oder Organopolysiloxan substituiert sein können, welche jeweils durch zweibindige, beidseitig an Kohlenstoffatome gebundene Reste aus der Gruppe -O-, -COO-, -OOC-, -CONR³-, -NR³CO-und -COunterbrochen sein können, und
R² einen gegebenenfalls Cyano-, Fluor-, Chlor- oder Brom-substituierten C₁- bis C₁₀-Kohlenwasserstoffrest bedeutet, und
R³ die Bedeutung Wasserstoff oder R² hat,
und wobei gilt a = 1, 2 oder 3, und b = 0, 1 oder 2,
und a + b = 1, 2 oder 3.

3. Silicon-haltige Polymerisate nach einem der Ansprüche 1 oder 2 mit R ist ein Wasserstoffatom, ein C₁- bis C₁₂-Alkoxyrest, ein C₁- bis C₁₈-Kohlenwasserstoffrest, A ist eine chemische Bindung oder ein zweiwertiger C₁- bis C₁₈-Kohlenwasserstoffrest, R¹ ist ein Wasserstoffatom, R² ist ein C₁- bis C₁₀-Kohlenwasserstoffrest.

4. Silicon-haltige Polymerisate nach einem der Ansprüche 1 bis 3, wobei das Peroxid-funktionelle Organopolysiloxan 20 bis 40 Einheiten, der allgemeinen Formel (I) aufweist.

5. Silicon-haltige Polymerisate nach einem der Ansprüche 1 bis 4, wobei das molare Verhältnis der die Peroxid-Gruppe - OOR¹ tragenden Siloxan-Einheiten zu den restlichen Siloxan-Einheiten 1 : 10 bis 1 : 1 beträgt.

6. Silicon-haltige Polymerisate nach einem der Ansprüche 1 bis 5, wobei das Peroxid-funktionelle Organopolysiloxan terminale Peroxid-Gruppen -OOR¹ aufweist.

7. Silicon-haltige Polymerisate nach einem der Ansprüche 1 bis 6, wobei das Peroxid-funktionelle Organopolysiloxan ein Organopolydialkylsiloxan ist, mit über Alkylen-Einheiten angebundene Peroxid-Einheiten, in der Kette oder terminal am Kettenende.

8. Verfahren zur Herstellung von Silicon-haltigen Polymerisaten von ethylenisch ungesättigten Monomeren, gemäß Anspruch 1 bis 7, durch radikalisch initiierte Polymerisation von ethylenisch ungesättigten Monomeren, **dadurch gekennzeichnet, dass** zur Initiierung der Polymerisation ein Organopolysiloxan eingesetzt wird, welches mindestens eine Peroxidgruppe -OOR¹ enthält, wobei R¹ ein Wasserstoffatom, einen einwertigen C₁- bis C₁₈-Kohlenwasserstoffrest oder C₁ bis C₁₈-Acylrest, welche jeweils mit Cyano-, Fluor-, Chlor-, Brom- oder Organopolysiloxan substituiert sein können, welche jeweils durch zweibindige, beidseitig an Kohlenstoffatome gebundene Reste aus der Gruppe -O-, -COO-, -OOC-, -CONR³-, -NR³CO-und -CO- unterbrochen sein können, bedeutet, und wobei R³ Wasserstoff oder einen gegebenenfalls Cyano-, Fluor-, Chlor- oder Brom-substituierten C₁ bis C₁₀-Kohlenwasserstoffrest bedeutet.

9. Verfahren nach Anspruch 8, wobei die radikalisch initiierte Polymerisation mittels Masse-, Lösungs-, Miniemulsionspolymerisation erfolgt.

10. Verwendung der Silicon-haltigen Polymerisaten gemäß Anspruch 1 bis 7 in der Kunststoffverarbeitung und -additivierung.

11. Verwendung der Silicon-haltigen Polymerisaten gemäß Anspruch 1 bis 7 in der Formkörperherstellung und Formkörperbeschichtung.

12. Verwendung der Silicon-haltigen Polymerisaten gemäß Anspruch 1 bis 7 als Lackadditive.

13. Verwendung der Silicon-haltigen Polymerisaten gemäß Anspruch 1 bis 7 als Bautenschutzmittel.

14. Verwendung der Silicon-haltigen Polymerisaten gemäß Anspruch 1 bis 7 Ausrüstung, Beschichtung und Bindung von Textilmaterialien.

15. Verwendung der Silicon-haltigen Polymerisaten gemäß Anspruch 1 bis 7 zur Papierbeschichtung.

16. Verwendung der Silicon-haltigen Polymerisaten gemäß Anspruch 1 bis 7 als Prozeßhilfsmittel.

17. Verwendung der Silicon-haltigen Polymerisaten gemäß Anspruch 1 bis 7 als Additive in der Kosmetik.

## Claims

1. Silicone-containing polymers of ethylenically unsaturated monomers, obtainable by free-radically initiated polymerization of ethylenically unsaturated monomers, **characterized in that** the polymerization is initiated using an organopolysiloxane which contains at least one peroxide group -OOR¹ in which R¹ is a hydrogen atom, a monovalent C₁ to C₁₈ hydrocarbon radical or C₁ to C₁₈ acyl radical each of which may be substituted by cyano-, fluoro-, chloro-, bromo- or organopolysiloxane and each of which may be interrupted by divalent radicals attached on both sides to carbon atoms and selected from the group consisting of -O-, -COO-, -OOC-, -CONR³-, -NR³CO-, and -CO-, R³ being hydrogen or an optionally cyano-, fluoro-, chloro- or bromo-substituted C₁ to C₁₀ hydrocarbon radical.

2. Silicone-containing polymers according to Claim 1, wherein the peroxide-functional organopolysiloxane contains at least one unit of the general formula
YₐR_{b}SiO_{4-a-b/2} (I) where Y is a group of the general formula -A-CR²₂-OO-R¹ (II)
and R is a hydrogen atom, a C₁ to C₁₂ alkoxy, hydroxyl or alkylglycol radical or monovalent, optionally cyano-, fluoro-, chloro- or bromo-substituted C₁ to C₁₈ hydrocarbon radical which may be interrupted by divalent radicals attached on both sides to carbon atoms and selected from the group consisting of -O-, -COO-, -OOC-, -CONR³-, -NR³CO- and -CO-,
and A is a chemical bond or a divalent, optionally cyano-, fluoro-, chloro- or bromo-substituted C₁ to C₁₈ hydrocarbon radical,
and R¹ is a hydrogen atom, a monovalent C₁ to C₁₈ hydrocarbon radical or C₁ to C₁₈ acyl radical each of which may be substituted by cyano-, fluoro-, chloro-, bromo- or organopolysiloxane and each of which may be interrupted by divalent radicals attached on both sides to carbon atoms and selected from the group consisting of -O-, -COO-, -OOC-, -CONR³-, -NR³CO- and -CO-, and
R² is an optionally cyano-, fluoro-, chloro- or bromo-substituted C₁ to C₁₀ hydrocarbon radical, and
R³ is defined as hydrogen or R²,
and where a = 1, 2 or 3, and b = 0, 1 or 2,
and a + b = 1, 2 or 3.

3. Silicone-containing polymers according to either of Claims 1 and 2 wherein R is a hydrogen atom, a C₁ to C₁₂ alkoxy radical, a C₁ to C₁₈ hydrocarbon radical, A is a chemical bond or a divalent C₁ to C₁₈ hydrocarbon radical, R¹ is a hydrogen atom, and R² is a C₁ to C₁₀ hydrocarbon radical.

4. Silicone-containing polymers according to any of Claims 1 to 3, wherein the peroxide-functional organopolysiloxane contains 20 to 40 units of the general formula (I).

5. Silicone-containing polymers according to any of Claims 1 to 4, wherein the molar ratio of the siloxane units carrying the peroxide group -OOR¹ to the remaining siloxane units is from 1:10 to 1:1.

6. Silicone-containing polymers according to any of Claims 1 to 5, wherein the peroxide-functional organopolysiloxane contains terminal peroxide groups -OOR¹.

7. Silicone-containing polymers according to any of Claims 1 to 6, wherein the peroxide-functional organopolysiloxane is an organopolydialkylsiloxane having peroxide units attached via alkylene units, in the chain or terminally at the chain end.

8. Process for preparing silicone-containing polymers of ethylenically unsaturated monomers, according to Claim 1 to 7, by free-radically initiated polymerization of ethylenically unsaturated monomers, **characterized in that** the polymerization is initiated using an organopolysiloxane which contains at least one peroxide group -OOR¹, where R¹ is a hydrogen atom, a monovalent C₁ to C₁₈ hydrocarbon radical or C₁ to C₁₈ acyl radical each of which may be substituted by cyano-, fluoro-, chloro-, bromo- or organopolysiloxane and each of which may be interrupted by divalent radicals attached on both sides to carbon atoms and selected from the group consisting of -O-, -COO-, -OOC-, -CONR³-, -NR³CO- and -CO-, R³ being hydrogen or an optionally cyano-, fluoro-, chloro- or bromo-substituted C₁ to C₁₀ hydrocarbon radical.

9. Process according to Claim 8, wherein the free-radically initiated polymerization takes place by means of bulk, solution, or miniemulsion polymerization.

10. The use of the silicone-containing polymers according to claim 1 to 7 in plastics processing and plastics modifying.

11. Use of the silicone-containing polymers according to Claim 1 to 7 in moulding production and the coating of mouldings.

12. Use of the silicone-containing polymers according to Claim 1 to 7 as coatings additives.

13. Use of the silicone-containing polymers according to Claim 1 to 7 as architectural preservatives.

14. Use of the silicone-containing polymers according to Claim 1 to 7 for the finishing, coating, and binding of textile materials.

15. Use of the silicone-containing polymers according to Claim 1 to 7 for paper coating.

16. Use of the silicone-containing polymers according to Claim 1 to 7 as process auxiliaries.

17. Use of the silicone-containing polymers according to Claim 1 to 7 as additives in cosmetology.

## Revendications

1. Polymérisats contenant du silicone de monomères éthyléniquement insaturés, que l'on peut obtenir par polymérisation initiée par voie radicalaire de monomères éthyléniquement insaturés, **caractérisés en ce qu'**on utilise pour l'initiation de la polymérisation un organopolysiloxane qui comporte au moins un groupe peroxyde -OOR¹, R¹ représentant un atome d'hydrogène, un radical hydrocarboné en C₁ à C₁₈ monovalent ou un radical acyle en C₁ à C₁₈ monovalent, qui peuvent être chacun substitués par un groupe cyano, fluoro, chloro, bromo ou organopolysiloxane, qui peuvent être interrompus à chaque fois par des radicaux liés des deux côtés à des atomes de carbone à deux liaisons, appartenant au groupe -O-, -COO-, -OOC-, -CONR³ -, -NR³CO- et -CO-, et R³ représentant un atome d'hydrogène ou un radical hydrocarboné en C₁ à C₁₀ cyano-, fluoro-, chloro- ou bromosubstitué.

2. Polymérisats contenant du silicone selon la revendication 1, l'organopolysiloxane à fonctionnalité peroxyde comportant au moins une unité de formule générale YₐR_{b}SiO_{4-a-b/2} (I), dans laquelle Y représente un groupe de formule générale -A-CR²₂ -OO-R¹ (II), et R représente un atome d'hydrogène, un radical alcoxy en C₁ à C₁₂, hydroxy ou alkylglycol ou un radical hydrocarboné en C₁ à C₁₈, le cas échéant cyano-, fluoro-, chloro- ou bromosubstitué, monovalent, qui peut être interrompu par des radicaux liés des deux côtés à des atomes de carbone à deux liaisons, appartenant au groupe -O-, -COO-, -OOC-, -CONR³-, -NR³CO- et -CO-, et A représente une liaison chimique ou un radical hydrocarboné en C₁ à C₁₈, le cas échéant cyano-, fluoro-, chloro- ou bromosubstitué, divalent, et R¹ représente un atome d'hydrogène, un radical hydrocarboné en C₁ à C₁₈ monovalent ou un radical acyle en C₁ à C₁₈, monovalent, qui peuvent être chacun substitués par un groupe cyano-, fluoro-, chloro-, bromo- ou organopolysiloxane, qui peuvent être à chaque fois interrompus par des radicaux liés des deux côtés à des atomes de carbone à deux liaisons, appartenant au groupe -O-, -COO-, -OOC-, -CONR³ -, -NR³CO- et -CO-, et R² représente un radical hydrocarboné en C₁ à C₁₀, le cas échéant, cyano-, fluoro-, chloro- ou bromosubstitué, et R³ représente un atome d'hydrogène ou R², et dans laquelle a = 1, 2 ou 3, et b = 0, 1 ou 2, et a + b = 1, 2 ou 3.

3. Polymérisats contenant du silicone selon la revendication 1 ou 2, où R représente un atome d'hydrogène, un radical alcoxy en C₁ à C₁₂, un radical hydrocarboné en C₁ à C₁₈, A représente une liaison chimique ou un radical hydrocarboné en C₁ à C₁₈ divalent, R¹ représente un atome d'hydrogène, R² représente un radical hydrocarboné en C₁ à C₁₀.

4. Polymérisats contenant du silicone selon l'une quelconque des revendications 1 à 3, l'organopolysiloxane à fonctionnalité peroxyde comportant 20 à 40 unités répondant à la formule générale (I).

5. Polymérisats contenant du silicone selon l'une quelconque des revendications 1 à 4, le rapport molaire des unités de siloxane portant le groupe peroxyde-OOR¹ aux unités de siloxane radicales étant de 1:10 à 1:1.

6. Polymérisats contenant du silicone selon l'une quelconque des revendications 1 à 5, l'organopolysiloxane à fonctionnalité peroxyde comportant des groupes peroxyde -OOR¹ terminaux.

7. Polymérisats contenant du silicone selon l'une quelconque des revendications 1 à 6, l'organopolysiloxane à fonctionnalité peroxyde étant un organopolydialkylsiloxane avec des unités peroxyde fixées par l'intermédiaire d'unités alkylène dans la chaîne ou en position terminale à l'extrémité de la chaîne.

8. Procédé pour la fabrication de polymérisats contenant du silicone de monomères éthyléniquement insaturés selon les revendications 1 à 7 par polymérisation initiée par voie radicalaire de monomères éthyléniquement insaturés, **caractérisé en ce qu'**on utilise pour l'initiation de la polymérisation un organopolysiloxane qui comporte au moins un groupe peroxyde -OOR¹, R¹ représentant un atome d'hydrogène, un radical hydrocarboné en C₁ à C₁₈ monovalent ou un radical acyle en C₁ à C₁₈ monovalent, qui peuvent être chacun substitués par un groupe cyano, fluoro, chloro, bromo ou organopolysiloxane, qui peuvent être interrompus à chaque fois par des radicaux liés des deux côtés à des atomes de carbone à deux liaisons, appartenant au groupe -O-, -COO-, -OOC-, -CONR³ -, -NR³CO- et -CO-, et R³ représentant un atome d'hydrogène ou un radical hydrocarboné en C₁ à C₁₀ cyano-, fluoro-, chloro- ou bromosubstitué.

9. Procédé selon la revendication 8, dans lequel la polymérisation initiée par voie radicalaire est effectuée par polymérisation en masse, en solution, en mini-émulsion.

10. Utilisation des polymérisats contenant du silicone selon les revendications 1 à 7, dans la mise en oeuvre et l'additivation des plastiques.

11. Utilisation des polymérisats contenant du silicone selon les revendications 1 à 7, dans la fabrication d'objets moulés et le revêtement d'objets moulés.

12. Utilisation des polymérisats contenant du silicone selon les revendications 1 à 7 comme additifs pour peintures.

13. Utilisation des polymérisats contenant du silicone selon les revendications 1 à 7 comme produits de protection des bâtiments.

14. Utilisation des polymérisats contenant du silicone selon les revendications 1 à 7, pour l'apprêtage, le revêtement et l'assemblage de matériaux textiles.

15. Utilisation des polymérisats contenant du silicone selon les revendications 1 à 7, pour le couchage du papier.

16. Utilisation des polymérisats contenant du silicone selon les revendications 1 à 7 comme adjuvants de procédés.

17. Utilisation des polymérisats contenant du silicone selon les revendications 1 à 7 comme additifs en cosmétique.
